# EUROPEAN PATENT APPLICATION

(11) **EP 4 644 624 A2**
(43) Date of publication of application: **05.11.2025**
(21) Application number: 25169155.6
(22) Date of filing: 08.04.2025
(51) Int. Cl.: E03C 1/04, E03C 1/05, F16K 11/22

(54) **ADJUSTMENT DEVICE FOR HYDROSANITARY DEVICES**

(30) Priority: 12.04.2024 IT 202400008287
(71) Applicant: Gessi S.P.A., 13037 Serravalle Sesia VC (IT)
(72) Inventor: Gessi, Gian Luca, 13037 Serravalle Sesia (IT)
(74) Representative: PGA S.p.A., Milano, Succursale di Lugano

(57) **Abstract**

Adjustment device (10) for hydrosanitary devices (100), comprising:
- at least one first inlet (11) for water;
- at least one first outlet (12) for water dispensing;
- at least one valve group (30) operatively interposed between said at least one first inlet (11) and said at least one first outlet (12), and configured and actionable to adjust at least a direction and/or a mass flow rate of fluid and/or a temperature of the water dispensed from said at least one first outlet (12);
- at least one first control element (20) of said valve group (30), operatively connected to said valve group (30) for actuating it and configured to be moved by a user;
wherein said at least one first control element (20) is movable with a translatory movement at least between a first end-stroke position (20a) and a second end-stroke position (20b).

## Description

### Field of the art

The present disclosure relates to the field of devices for adjusting characteristics of fluids, in particular water.

In detail, the present disclosure concerns an adjustment device for hydrosanitary devices, a hydrosanitary device comprising said adjustment device and a control device.

### Background art

Faucets for hydrosanitary applications can have different shapes and actuation modes and are traditionally conceived for varying the flow of water.

In the past, the dispensing of water by hydrosanitary devices like sinks or showers took place by means of two separate controls, whose function was to respectively adjust the hot water flow and the cold water flow. The user, acting alternatively or simultaneously on the controls, adjusted both the overall flow and the temperature of the water. The actuation of traditional controls took place by rotating a dispensing knob, which is connected to a movable equipment of a valve group; the rotation of the dispensing knob took place co-axially with the movable equipment of the valve group.

The dispensing knob could be of an "L" type, or could have two or four maneuvering pommels.

Subsequently appeared mixers which have joined the function of the two separate controls in a single dispensing device. Mixers operate by means of a rotation movement centered on the axis of the movable equipment of the valve group; this function allows to vary the temperature of the water that will be dispensed. A further function of rotation takes place on a plane orthogonal to the first one, and allows to vary the water flow rate.

Mixers, therefore, prevent the user from having to act on two distinct commands for performing the above-described settings.

It is noted that both the faucets with traditional control with separate knobs, and the mixers, are provided with a substantially rotatory movement.

### Summary

The Applicant has conceived a new control experience of an adjustment device destined to hydrosanitary applications, that differentiates from the above-described substantially rotatory movement for detecting a movement substantially different with respect to the one up to now used for the controls of the hydrosanitary devices.

The adjustment device that forms object of the present disclosure is herein described in some main aspects thereof.

In particular, the adjustment device herein described can be used both for adjusting a valve group and for adjusting a different function of the hydrosanitary device.

Furthermore, it is an object of the present disclosure a water dispensing device, or hydrosanitary device, that includes the adjustment device herein described.

The aspects herein described can be combined together and/or with portions of the detailed description and/or of the attached claims.

In accordance to a first aspect, it is herein described an adjustment device (10) for hydrosanitary devices (100). The adjustment device (10) comprises:
- at least one first inlet (11) for water;
- at least one first outlet (12) for water dispensing;
- at least one valve group (30) operatively interposed between said at least one first inlet (11) and said at least one first outlet (12), and configured and actionable to adjust at least one direction and/or a mass flow rate of fluid and/or a temperature of the water dispensed from said at least one first outlet (12);
- at least one first control element (20) of said valve group (30), operatively connected to said valve group (30) for actuating it and configured to be moved by a user;
wherein said at least one first control element (20) is movable with a translatory movement at least between a first end-stroke position (20a) and a second end-stroke position (20b).

According to a further non-limiting aspect, the adjustment device (10) comprises a striking surface (24) for said at least one first control element (20).

According to a further non-limiting aspect, said valve group (30) is a valve group for a water dispensing device, in particular for a hydrosanitary device.

According to a further non-limiting aspect, said at least one first control element (20) is movable with said translatory movement with respect to and/or on said striking surface (24).

According to a further non-limiting aspect, said striking surface (24) is a surface destined to assume a position fixed with respect to an installation environment of said hydrosanitary device (100).

According to a further non-limiting aspect, said striking surface (24) presents a slot (22) configured to house at least a part of the first control element (20) and/or defining a delimited movement path for said at least one first control element (20), in particular between said first end-stroke position (20a) and said second end-stroke position (20b).

According to a further non-limiting aspect, the striking surface (24) is configured to be engaged, preferably fixed, to a support or wall (200).

According to a further non-limiting aspect, the striking surface (24) is configured to lie in a position fixed with respect to said support or wall (200).

According to a further non-limiting aspect, said support is a sink holder.

According to a further non-limiting aspect, said adjustment device (10) is a built-in device.

According to a further non-limiting aspect, said substantial translation movement is a movement substantially developing on a plane, preferably a plane parallel to a plane on which said striking surface (24) lies.

According to a further non-limiting aspect, said striking surface (24) develops uninterruptedly and/or comprises a single uninterrupted element.

According to a further non-limiting aspect, said striking surface (24) develops along a first direction of maximum extension and along a second direction of maximum extension, and/or presents a substantially planar structure.

According to a further non-limiting aspect, said slot (22) is aligned to said substantially planar structure and/or is substantially parallel to said first direction of maximum extension and/or to said second direction of maximum extension.

According to a further non-limiting aspect, at least part of said control element (20) protrudes along a direction substantially orthogonal to a plane identified by said first direction of maximum extension and by said second direction of maximum extension.

According to a further non-limiting aspect, said second direction of maximum extension is orthogonal to said first direction of maximum extension.

According to a further non-limiting aspect, said substantial translation movement takes place on a substantially straight path defined along a translation axis (Z) of said at least one first control element (20) defined between said first end-stroke position (20a) and said second end-stroke position (20b), or takes place on a substantially curvilinear path defined between said first end-stroke position (20a) and said second end-stroke position (20b).

According to a further non-limiting aspect, said at least one first control element (20) is configured to be positioned in a plurality of intermediate positions between said first end-stroke position (20a) and said second end-stroke position (20b).

According to a further non-limiting aspect, at least an intermediate position of said plurality of intermediate positions, preferably wherein the plurality of intermediate positions, and/or at least one between said first end-stroke position (20a) and said second end-stroke position (20b) is a stable position.

According to a further non-limiting aspect, the adjustment device (10) comprises a motion transfer mechanism (40).

According to a further non-limiting aspect, said valve group (30) comprises a movable equipment, in particular movable in rotation with respect to a fixed equipment of said valve group (30).

According to a further non-limiting aspect, said motion transfer mechanism (40) is operatively connected, in particular operatively interposed, between said movable equipment and said at least one first control element (20).

According to a further non-limiting aspect, said motion transfer mechanism (40) is configured to convert the substantial translation movement of said at least one first control element (20) in a movement of rotation of said movable equipment.

According to a further non-limiting aspect, said striking surface (24) defines at least one between said first end-stroke position (20a) and said second end-stroke position (20b).

According to a further non-limiting aspect, said slot (22) comprises a first end defining said first end-stroke position (20a) and a second end defining said second end-stroke position (20b).

According to a further non-limiting aspect, the movable equipment comprises a respective first stopping position and a second stopping position, and said first stopping position defines said first end-stroke position (20a) and said second stopping position defines said second end-stroke position (20b).

According to a further non-limiting aspect, said movable equipment rotates on an its own rotation axis, and wherein said at least one first control element (20) lies in a position offset with respect to said rotation axis of said movable equipment.

According to a further non-limiting aspect, said translatory movement takes place along a path offset with respect to said rotation axis of said movable equipment.

According to a further non-limiting aspect, said translatory movement takes place along a plane inclined, preferably substantially orthogonal, with respect to said rotation axis of said movable equipment.

According to a further non-limiting aspect, said valve group (30) comprises a driven gear (31) connected, optionally fixed, to said movable equipment.

According to a further non-limiting aspect, the driving gear (41) comprises a slotted portion (42).

According to a further non-limiting aspect, the adjustment device (10) comprises a pin (43) in use introduced and sliding into said slotted portion (42).

According to a further non-limiting aspect, said slotted portion (42) comprises a first end and a second end and at least one between said first end-stroke position (20a) and said second end-stroke position (20b) is defined by said first end and/or by said second end of said slotted portion (42).

According to a further non-limiting aspect, said slotted portion (42) is in form of a circular sector.

According to a further non-limiting aspect, said driven gear (31), when moved, determines a corresponding movement of said movable equipment.

According to a further non-limiting aspect, said motion transfer mechanism (40) comprises at least one driving gear (41) acting on said driven gear (31) of said valve group (30).

According to a further non-limiting aspect,
- said driven gear (31) is a toothed wheel gear, and/or
- said driving gear (41) is a toothed wheel gear.

According to a further non-limiting aspect, the motion transfer mechanism (40) comprises a body rotating on a plane at least locally substantially parallel to a surface, preferably a plane, of movement of said at least one first control element (20).

According to a further non-limiting aspect, the body of the motion transfer mechanism (40) comprises an eyelet (45) allowing a relative sliding between said at least one first control element (20) and the body of the motion transfer mechanism (40).

According to a further non-limiting aspect, said relative translation takes place on the plane of rotation of said body.

According to a further non-limiting aspect, said relative translation takes place on a translation axis (K) substantially orthogonal to said translation axis (Z) of said at least one first control element (20).

According to a further non-limiting aspect, said driving gear (41) and said driven gear (31) are directly coupled to and/or are configured to counter-rotate the one with respect to the other.

According to a further non-limiting aspect, said driving gear (41) comprises a respective pivoting and/or rotation axis (X) and said driven gear (31) comprises a respective pivoting and/or rotation axis (Y).

According to a further non-limiting aspect, the pivoting and/or rotation axis (X) of the driving gear (41) and the pivoting and/or rotation axis (Y) of the driven gear (31) are in a fixed reciprocal positional relation and/or are fixed or, alternatively, the pivoting and/or rotation axis (X) of the driving gear (41) and the pivoting and/or rotation axis (Y) of the driven gear (31) are in a reciprocal positional relation variable in the space.

According to a further non-limiting aspect, the driving gear (41) orbits around said driven gear (31) and, optionally, does not rotate on itself.

According to a further non-limiting aspect, said driving gear (41) comprises a rack, said driven gear comprises a toothed wheel and said rack is directly coupled to said toothed wheel.

According to a further non-limiting aspect, said body of the motion transfer mechanism (40) is rotatably constrained in correspondence of said pivoting axis (Y) of said driven gear (31).

According to a further non-limiting aspect, said valve group (30) is a thermostatic valve group.

According to a further non-limiting aspect, said adjustment device (10) comprises at least one first fastening element (50) operatively acting on the stroke of said at least one first control element (20) for defining a first intermediate stopping position (20c).

According to a further non-limiting aspect, said first intermediate stopping position (20c) is arranged between said first end-stroke position (20a) and said second end-stroke position (20b).

According to a further non-limiting aspect, said at least one first fastening element (50) is movable in rotation and/or translation for releasing said at least one first control element (20) in the movement beyond said intermediate stopping position (20c).

According to a further non-limiting aspect, said first intermediate stopping position (20c) is selectively present according to a sense of movement of said at least one first control element (20) between said first end-stroke position (20a) and said second end-stroke position (20b).

According to a further non-limiting aspect,
- said at least one first fastening element (50) operatively acts on the stroke of said at least one first control element (20) from said first end-stroke position (20a) to said second end-stroke position (20b) preventing the movement of said at least one first control element (20) from said first intermediate stopping position (20c) to said second end-stroke position (20b) and allowing a free movement of said at least one first control element (20) from said second end-stroke position (20b) to said first end-stroke position (20a), or alternatively,
- said at least one first fastening element (50) operatively acts on the stroke of said at least one first control element (20) from said second end-stroke position (20b) to said first end-stroke position (20a) preventing the movement of said at least one first control element (20) from said first intermediate stopping position (20c) to said first end-stroke position (20a) and allowing a free movement of said at least one first control element (20) from said first end-stroke position (20a) to said second end-stroke position (20b).

According to a further non-limiting aspect, said at least one first fastening element (50) is embedded in said at least one first control element (20).

According to a further non-limiting aspect, said at least one first fastening element (50) is selectively activated or deactivated for determining, for preventing or releasing said at least one first control element (20) in the movement beyond said first intermediate stopping position (20c) by means of a translation of said first control element (20), preferably along a direction substantially orthogonal with respect to the translation direction between said first end-stroke position (20a) and said second end-stroke position (20b) and/or by means of a rotation of said at least one first control element (20) preferably around an axis orthogonal to the translation direction between said first end-stroke position (20a) and said second end-stroke position (20b).

According to a further non-limiting aspect, said adjustment device (10) comprises a second fastening element (50) operatively acting on the stroke of said at least one first control element (20) for defining a second intermediate stopping position.

According to a further non-limiting aspect, said second intermediate stopping position is arranged between said first end-stroke position (20a) and said first intermediate stopping position or between said first intermediate stopping position and said second end-stroke position (20b).

According to a further non-limiting aspect, at least one between said first fastening element (50) and said second fastening element (50) is mechanically controlled and/or is electrically controlled.

According to a further non-limiting aspect, said second fastening element is movable in rotation and/or translation for releasing said at least one first control element (20) in the movement beyond said second intermediate stopping position.

According to a further non-limiting aspect, the second intermediate stopping position is selectively present according to a sense of movement of said at least one first control element (20) between said first end-stroke position (20a) and said second end-stroke position (20b) and/or between said first end-stroke position (20a) and said first intermediate stopping position and/or between said first intermediate stopping position and said second end-stroke position (20b).

According to a further non-limiting aspect,
- said second fastening element operatively acts on the stroke of said at least one first control element (20) from said first end-stroke position (20a) to said second end-stroke position (20b) preventing the movement of said at least one first control element (20) from said second intermediate stopping position to said second end-stroke position (20b) and allowing a free movement of said at least one first control element (20) from said second end-stroke position (20b) to said first intermediate stopping position (20c) and/or to said first end-stroke position (20a), or alternatively
- said second fastening element operatively acts on the stroke of said at least one first control element (20) from said second end-stroke position (20b) to said first end-stroke position (20a) preventing the movement of said at least one first control element (20) from said second intermediate stopping position (20c) to said first intermediate stopping position (20c) and allowing a free movement of said at least one first control element (20) from said first intermediate stopping position to said second intermediate stopping position and/or to said second end-stroke position (20b).

According to a further non-limiting aspect, said second fastening element is embedded in said at least one first control element (20).

According to a further non-limiting aspect, said second fastening element (50) is selectively activated or deactivated for determining or for preventing or releasing said at least one first control element (20) in the movement beyond said second intermediate stopping position by means of a translation of said first control element (20), preferably along a direction substantially orthogonal with respect to the translation direction between said first end-stroke position (20a) and said second end-stroke position (20b) and/or by means of a rotation of said at least one first control element (20) preferably around an axis orthogonal to the translation direction between said first end-stroke position (20a) and said second end-stroke position (20b).

According to a further non-limiting aspect, the adjustment device (10) comprises a second inlet (13) for water.

According to a further non-limiting aspect, said valve group (30) is operatively interposed between, and connected to, said first inlet (11), said second inlet (13) and said first outlet (12).

According to a further non-limiting aspect, said valve group (30) is configured to adjust a mixing ratio between a water flow coming from said first inlet (11) and a water flow coming from said second inlet (13) thereby determining the control of said temperature of the water dispensed on said at least one first outlet (12).

According to a further non-limiting aspect, the adjustment device (10) comprises an auxiliary valve group (32) operatively interposed between, and connected to, an outlet of said valve group (30) and said first outlet (12).

According to a further non-limiting aspect, said adjustment device (10) comprises a second control element (23) for said valve group (30).

According to a further non-limiting aspect, the second control element (23) is operatively connected to said auxiliary valve group (32) and is configured to be moved by said user.

According to a further non-limiting aspect, said first control element (20) and said second control element (23) are independently movable.

According to a further non-limiting aspect, the second control element (23) is mobile with a substantial translation movement between a first end-stroke position (23a) and a second end-stroke position (23b).

According to a further non-limiting aspect, said auxiliary valve group (32) is configured to control a mass flow rate of fluid of the water dispensed on said at least one first outlet (12).

According to a further non-limiting aspect, the adjustment device (10) comprises a body (60), configured to retain said at least one valve group (30), optionally said valve group (30) and said auxiliary valve group (32), in a predefined position.

According to a further non-limiting aspect, said body (60) is a substantially boxed body, configured to be fixed in a predefined position on a support, preferably to a wall (200), optionally to be at least partially built-in within said support, preferably to be at least partially built-in within said wall (200).

According to a further non-limiting aspect, said striking surface (24) is configured to be constrained, preferably removably constrained, to said body (60).

According to a further non-limiting aspect, said body (60) is configured to contain, preferably entirely, said valve group (30), optionally said valve group and said auxiliary valve group (32).

According to a further non-limiting aspect, said striking surface (24) is a surface substantially detecting a curved profile, in particular detecting a curve substantially extending obliquely, preferably orthogonally, with respect to a development direction of said translatory movement of the at least one first control element.

According to a further non-limiting aspect, said at least one first control element (20) has a proximity surface to said striking surface (24) detecting a curved profile tracing the curved profile locally assumed by said striking surface (24).

According to a further non-limiting aspect, said striking surface (24) has a variable thickness, and has a central portion (24c) and a first lateral portion (24b) and a second lateral portion (24b).

According to a further non-limiting aspect, the thickness is minimum in correspondence of said central portion (24c) and higher with respect to said minimum in correspondence of at least one between said first lateral portion (24b) and said second lateral portion (24b).

According to a further non-limiting aspect, said adjustment device (10) comprises at least one second outlet (14).

According to a further non-limiting aspect, said valve group (30) is operatively interposed between said first inlet (11) and said second outlet (14).

According to a further non-limiting aspect, said valve group (30) is configured and actionable to adjust at least a direction of the water dispensed between said at least one first outlet (12) and said second outlet (14).

According to a further non-limiting aspect, said valve group (30) is configured and actuatable to vary, optionally uninterruptedly, a flow percentage between a first minimum value and a second maximum value in use dispensed between said first outlet (12) and said second outlet (14).

According to a further non-limiting aspect, said first minimum value is a value other than zero.

According to a further non-limiting aspect, said second maximum value is a value lower than 100%.

According to a further non-limiting aspect, said valve group (30) is configured and actuatable to switch in an alternative way the water dispensing between said first outlet (12) and said second outlet (14).

According to a further non-limiting aspect, at least one between said at least one first control element (20) and said second control element (23) is a physical command and comprises a gripping portion in use directly controlled and/or manipulated by the fingers of a user.

According to a further non-limiting aspect, said adjustment device (10) comprises a first servo-actuator, optionally an electric motor, operatively connected with said at least one first control element (20) and configured to determine a movement of said at least one first control element (20) by means of a remote control, preferably a wireless remote control.

According to a further non-limiting aspect, said adjustment device (10) comprises a second servo-actuator, optionally an electric motor, operatively connected with said second control element (23) and configured to determine a movement of said second control element (23) by means of a remote control, preferably a wireless remote control.

According to a further non-limiting aspect, said at least one first control element (20) is a virtual control, and said striking surface (24) comprises a screen in use representing the image of said at least one first control element (20).

According to a further non-limiting aspect, said second control element (23) is a virtual control, and said striking surface (24) comprises a screen in use representing the image of said second control element (23).

According to a further non-limiting aspect, said screen is touch-sensitive to allow the movement of said second control element (23) between said first end-stroke position (20a) and said second end-stroke position (20b).

According to a further non-limiting aspect, wherein said at least one first control element (20) is electronically re-assignable, preferably electronically re-assignable to an accessory function different from an actuation of said valve group (30).

According to a further non-limiting aspect, said adjustment device (10) comprises a data processing unit (10m) operatively, preferably electrically and/or optically, connected to said screen.

According to a further non-limiting aspect, said data processing unit (10m) is configured to assign said at least one first control element (20) to the actuation of said valve group (30) or, alternatively, to said accessory function.

According to a further non-limiting aspect, said accessory function is a function of control of an electronic device, optionally at least one among a home automation device, a multimedia source, an optical radiation source.

According to a further non-limiting aspect, said home automation device comprises at least one among a fan, a conditioner, a vaporizer or humidifier, an aroma diffuser, a heater, an anti-theft.

According to a further non-limiting aspect, an arrangement of said at least one first control element (20) with respect to said striking surface (24) is such that at least one part of said at least one first control element (20), preferably at least one gripping portion of said at least one first control element (20), rests at a fixed distance with respect to said striking surface (24) in at least part of said translatory movement.

According to a further non-limiting aspect, said striking surface (24) defines a substantially curved profile, preferably at least in correspondence of said slot (22), and at least part of said at least one first control element (20) follows said substantially curved profile.

According to a further non-limiting aspect, said substantially curved profile is a profile whose curve is tangent to a direction along which said at least one first control element (20) extends from said striking surface (24).

According to a further non-limiting aspect, said first fastening element (50) is embedded in, or on, said at least one first control element (20).

According to a further non-limiting aspect, said second fastening element (50) is embedded in, or on, said second control element (20).

According to a further non-limiting aspect, at least one between said first fastening element (50) and said second fastening element (50) is movable with a substantially roto-translatory composite movement.

According to a further non-limiting aspect, when said first fastening element (50) is embedded in, or on, said at least one first control element (20), said at least one first control element (20) results movable in translation along a direction substantially oblique, preferably orthogonal, with respect to said translatory movement, optionally oblique, preferably orthogonal, with respect to said striking surface (24), and/or movable in rotation along an axis substantially oblique, preferably orthogonal, with respect to said translatory movement, optionally oblique, preferably orthogonal, with respect to said striking surface (24).

According to a further non-limiting aspect, when said second fastening element (50) is embedded in, or on, said second control element (23), said second control element (23) results movable in translation along a direction substantially oblique, preferably orthogonal, with respect to said translatory movement, optionally oblique, preferably orthogonal, with respect to said striking surface (24), and/or movable in rotation along an axis substantially oblique, preferably orthogonal, with respect to said translatory movement, optionally oblique, preferably orthogonal, with respect to said striking surface (24).

In accordance to a second independent aspect, it is herein described an adjustment device (10) for hydrosanitary devices (100), comprising:
- at least one first control element (20), configured to control the operation of at least one component, in particular a movable component, of a hydrosanitary device (100), and configured to be directly controlled by the touch of a user;
- a striking surface (24) for said at least one first control element (20), said striking surface (24) being configured to be engaged, preferably fixed, to said hydrosanitary device (100),
- wherein said at least one first control element (20) is movable with a translatory movement at least between a first end-stroke position (20a) and a second end-stroke position (20b);
wherein said adjustment device (10) is configured to be installed in a substantially front position and/or in use directly visible of said hydrosanitary device (100).

According to a further non-limiting aspect, said adjustment device (10) comprises:
- at least one first inlet (11) for water;
- at least one first outlet (12) for water dispensing.

According to a further non-limiting aspect, said at least one component comprises at least one valve group (30) operatively interposed between said at least one first inlet (11) and said at least one first outlet (12), and configured and actionable to adjust at least a direction and/or a mass flow rate of fluid and/or a temperature of the water dispensed from said at least one first outlet (12).

According to a further non-limiting aspect, said at least one first control element (20) is a control element of said valve group (30), operatively connected to said valve group (30) for actuating it and configured to be moved by a user.

According to a further non-limiting aspect, said at least one component is a movable component.

According to a further non-limiting aspect, said at least one component comprises a discharge stopper of said hydrosanitary device (100) or a position adjuster (regolatore) of a faucet or of a head of water dispensing.

### Water dispensing device

In accordance to a third independent aspect, it is herein described a water dispensing device, preferably for hydrosanitary applications; the water dispensing device comprising an adjustment device (10) according to one or more of the aspects herein provided.

According to a further non-limiting aspect, the water dispensing device is a hydrosanitary device (100).

According to a further non-limiting aspect, the hydrosanitary device comprises a shower head, or a faucet for bathroom or kitchen.

### Control device

In accordance to a fourth independent aspect, it is further described a control device (10) for a valve group (30) configured to dispense a flow of water from hydrosanitary devices (100), comprising:
- at least one first control element (20) of said valve group (30), operatively connected to said valve group (30) for actuating it and configured to be moved by a user, wherein said at least one first control element (20) is movable with a translatory movement at least between a first end-stroke position (20a) and a second end-stroke position (20b);
- a motion transfer mechanism (40),

wherein said valve group (30) comprises a movable equipment, in particular movable in rotation, with respect to a fixed equipment of said valve group (30);
and wherein said motion transfer mechanism (40) is operatively connected, in particular operatively interposed, between a movable equipment of said valve group (30) and said at least one first control element (20);
said motion transfer mechanism (40) being configured to convert the movement of said at least one first control element (20) in a movement of rotation of said movable equipment.

According to a further non-limiting aspect, said control device (10) comprises said valve group (30).

### Figures

The following detailed description refers to some non-limiting embodiments, which are described by referring to the attached figures.
Figure 1 shows a schematic view of a water dispensing device provided with a valve according to the present disclosure.
Figure 2 shows a front view of a control panel of the valve object of the present disclosure.
Figures from 3 to 6 show hydraulic inlet/outlet configurations for one or more valves.
Figure 7 shows a front view of a further embodiment of the valve object of the present disclosure.
Figure 8 shows a front view of a further embodiment of the valve object of the present disclosure.
Figure 9, figure 10 and figure 11 show views of an adjustment portion of a valve group, with motion transfer device, according to a first, a second and a third embodiment.
Figure 12 shows a particular embodiment of the adjustment device, wherein a striking surface for a control element presents a substantially curved profile.
Figure 13 shows a particular embodiment of the adjustment device, wherein it is present a stopping element, suitable for blocking the stroke of the control element in an intermediate position between a first end-stroke position and a second end stroke portion.
Figure 14 shows a particular embodiment of the adjustment device object of the present disclosure, with a first control element and a second control element of virtual type.
Figure 15 shows a perspective view of a screen wherein are shown a first and a second control element.

### Detailed description

The reference number 100 identifies as a whole a water dispensing device, preferably for hydrosanitary applications.

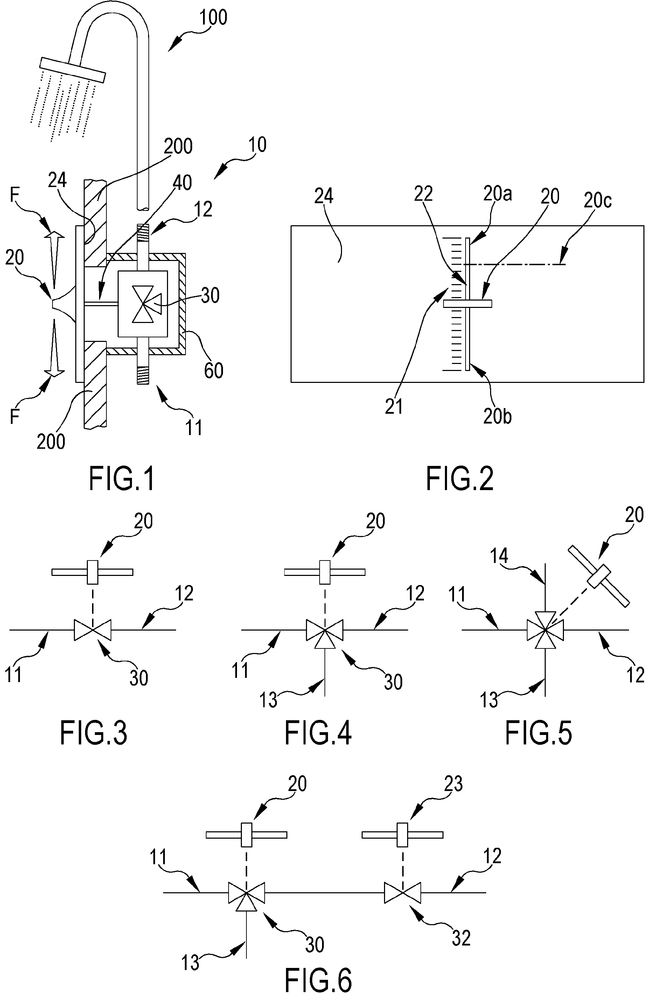

The water dispensing device can be, as in the case of figure 1, a shower head with relative spout, or can be a bathroom faucet, or a kitchen faucet, or a bidet faucet or similar.

The water dispensing device 100 is provided with a control valve 1 that is hereinafter described.

In its easiest embodiment the adjustment device 10 comprises an inlet 11 for water, and an outlet 12 for water dispensing.

With reference to figure 1, the outlet 12 is destined to allow the water dispensing towards the shower head. The application to the shower head is not to be intended as limiting.

A shower head typically comprises a substantially rigid dispensing portion, provided with one or more holes from which in use the water flows.

The shower head can comprise devices that allow to select a type of water dispensing, and that in particular can be used to select a more or less high water atomization, or a rain jet, or a more incisive or pulsed jet.

The shower head can comprise, or be connected with, a water inlet duct, which is preferably of flexible type and is for example corrugated.

The shower head can be realized in plastic material or in metallic material, or in fiberglass or in any combination of these materials.

The adjustment device 10 further comprises a valve group 30 operatively interposed between, and connected to, the inlet 11 and to the outlet 12.

The valve group 30 is configured to control at least one between a temperature and a flow rate (mass flow rate) of the water between the inlet 11 and the outlet 12.

As it will become clear by continuing with the reading of the present description, the valve group 30 in some embodiments can be used for controlling a direction between a first outlet and a second outlet.

To allow the above-mentioned settings, the valve group 30 is provided with a fixed equipment and with a movable equipment.

Typically, the movable equipment is positioned inside the fixed equipment and axially rotates with respect to the latter. The fixed equipment is the one that assumes a fixed spatial arrangement and that is arranged in such a way to be constrained, in particular fixed, to the body 60.

The fixed equipment and the movable equipment are typically realized in metallic material or in alloy of metallic materials.

At least part of the valve group 30 can be realized in material comprising brass. Brass is one of the most common materials used for valve bodies; it is resistant to the corrosion and has a good mechanical strength. It is also relatively easy to process, that makes it a popular choice for valves.

Alternatively, at least part of the valve body can be realized in stainless steel: this material is known for its resistance to corrosion and rust.

Still alternatively, part of the valve body 30 can be realized in plastic material (for example, PVC, PPR, FRP), or in bronze or further copper alloy.

The adjustment device 10 object of the present disclosure comprises at least one first control element 20, which in the embodiments object of the present disclosure is a physical command in form of a cursor similar to the one used in some Hi-Fi or audio mixing systems. Thanks to this technical feature, it is provided a particular control mode of the features of water dispensing, that simulates the control that is for example present on the volume, on the balance, or on the treble or bass tones of some Hi-Fi or audio mixing systems.

The first control element 20 is configured to be directly activated, in particular manipulated, by the touch of the fingers of a user.

The control element 20 comprises a gripping portion, that is in use directly grasped by the user and that can show a surface substantially smooth or at least partially provided with knurling suitable for allowing a greater friction with the fingers of the user.

The gripping portion can conveniently have two substantially counterposed walls; such walls are gripping walls, configured to be directly contacted by the user, in particular by a first and by a second finger of the user.

The control element 20 comprises also an engaging element, that is connected with the gripping portion, and that is destined to connect the control element 20 to the valve group 30, for example by means of a motion transfer mechanism that will be better described in the following portions of the description.

The control element 20 is operatively connected to the valve group 30; in use, the user directly grabs the control element 20 in correspondence of the gripping portion, in order to adjust the operation of the valve group 30.

In light of the above-described characteristics, it therefore appears clear that the control element 20 is movable with a substantial translation movement between a first end-stroke position 20a and a second end-stroke position 20b. Such movement therefore differs from the substantial rotation of classical faucets or from the two-axis rotation of traditional mixer faucets.

In a preferred embodiment, the adjustment device 10 is destined to be built-in in a wall 200, or anyway on a fixed support. For this reason, the adjustment device 10 comprises a striking surface 24 for the control element 20, which can be arranged in any spatial orientation, for example and not limiting thereto vertical or horizontal.

Likewise, the functionality of the control element 20 is guaranteed for any spatial orientation of the translatory movement.

In some embodiments, the gripping portion can be thinner in correspondence of a first distant area with respect to the striking surface 24 and thicker in correspondence of a second area, preferably substantially opposed to the first, and placed in proximity of the striking surface 24.

The striking surface 24 can be realized in metallic material, or in plastic material, or in wood or in a combination of two or more of the preceding materials.

In an embodiment, the striking surface 24 is substantially planar, and can present a rectangle shape with rounded corners.

The translatory movement that takes place between the first control element 20 and the striking surface 24 can be a substantially planar translatory movement.

The translatory movement that takes place between the first control element 20 and the striking surface can be such as to keep said first control element 20, and in particular at least its gripping portion, at a fixed distance with respect to said striking surface 24. In particular, this can be true both in case the striking surface is of planar type, and in case the striking surface is curved and defines, in particular in correspondence of the slot 22, a substantially curved profile.

Such substantially curved profile can be a profile whose curve is tangent to a direction along which the control element 20 extends from the striking surface 24 itself. In such case the translatory movement is destined to follow the above-mentioned profile, thus being able to keep a fixed distance between the gripping portion of the first control element 20 and the striking surface 24.

What is herein described is applicable to any further control element part of the adjustment device 10.

The striking surface 24 is a surface destined to assume a position fixed with respect to an installation environment of the hydrosanitary device 100. More in particular, the striking surface 24 is configured to be fixed to a support or wall 200 and to lie in a position fixed with respect to said support or wall 200.

As schematically shown for example in figure 1, in an embodiment the adjustment device 10 object of the present disclosure comprises a body 60, preferably realized in plastic material, and preferably box-shaped.

The body 60 is configured to be fixed to a support in a stable way, and more precisely is configured to be built-in at least partially within such support, for example within a wall 200. It appears therefore clear that a preferred embodiment of the adjustment device 10 herein described is specifically destined to be "built-in".

Alternatively, the adjustment device 10 herein described can be a device suitable for being installed on a support above a faucet or anyway above a supporting plane.

The body 60 retains the valve group 30 in a predefined position; in figure 1 it is shown a configuration wherein the body 60 retains and houses entirely the valve group 30.

Thanks to this technical feature the operator can simply carry out a hole in a wall, such as to contain the body 60; this latter, housing the valve group 30, only needs to be connected to the water source.

The control element 20 protrudes in a substantial way from the striking surface 24, and preferably protrudes substantially orthogonally from that striking surface 24.

The control element 20 is movable with the substantial translation movement with respect to said striking surface 24.

In particular, the translation with respect to the striking surface is preferably of substantially linear type; some embodiments, however, can have a translation with respect to the striking surface that follows a substantially curved path.

In light of the above description, it appears clear that the movement of substantial translation takes place on a substantially straight path defined between said first end-stroke position 20a and said second end-stroke position 20b, or takes place on a substantially curved path defined between said first end-stroke position 20a and said second end-stroke position 20b.

As schematically represented in figure 2, preferably the striking surface 24 presents a slot 22 configured to house at least a part of the first control element 20 and/or defining a confined movement path for the control element 20, in particular between said first end-stroke position 20a and said second end-stroke position 20b.

The striking surface 24 preferably extends uninterruptedly, and the slot 22 is realized in such a way not to interrupt this continuous extension. In other words, around the slot 22, it is always present a part of striking surface. Between the two directions along which the striking surface 24 mainly extends, at least one is preferably parallel to the direction along which the slot develops. The motion of the control element 20 with respect to the striking surface 24 takes place on a plane substantially parallel to the main development plane of the striking surface 24.

It results that in an embodiment at least part of the control element 20, and in particular the gripping portion of the control element, develop in a direction substantially orthogonal with respect to a main development plane of the striking surface 24 and therefore in direction oblique/orthogonal to a first direction of maximum extension and to a second direction of maximum extension defined by the plane (or anyway by the surface, if non-planar) of the striking surface 24. The second direction of maximum extension is orthogonal to the first direction of maximum extension.

Reference elements 21, for example constituting a graduated scale, can be potentially present and provide a visual indication to the user, for example indicating the temperature of the water dispensed from the outlet 12 and/or for example indicating the flow (fluid mass flow rate, or flow). The reference elements 21 can be conveniently painted, or excised by means of a laser, or embossed, on the visible face of the striking surface 24.

The reference elements 21 can provide a qualitative value or a quantitative value on said graduated scale.

The motion of substantial translation that is made possible by the cursor-like control element is a movement that develops then substantially on a plane, and preferably on a plane parallel to the plane on which the striking surface 24 lies.

The attached figures, and in particular figure 2, figure 7, figure 8 and figure 12, show specific embodiments of the adjustment device 10 wherein the movement of the control element 20 takes place on a substantially straight path defined between the first end-stroke position 20a and the second end-stroke position 20b. This technical feature allows to keep reduced the overall thickness of the adjustment device 10, as it is for example visible from figure 1, in particular outside the wall 200.

The straightness of the translation movement shall not be intended in a limiting way; in fact, the translation movement can further be curved.

In a preferred embodiment, the control element 20 is configured to be positioned in a plurality of intermediate positions between the first end-stroke position 20a and the second end-stroke position 20b; therefore, in such embodiment, the control element 20 differs substantially from a switch-like operation, that is anyway further provided should the control element 20 be destined to adjust a deviation of a water flow between a first outlet and a second outlet of the valve group 30.

It appears therefore clear that the control element 20, at least where the positioning in the above-described intermediate positions is possible, is destined to operate in a way substantially similar to a potentiometer of a Hi-Fi or mixer system.

Preferably, the intermediate positions (or at least, part thereof) are stable positions; this, further than providing the aforementioned effect, is particularly useful in relation to a specific use of the adjustment device 10 herein described. In fact, thanks to this technical feature it is possible to freely adjust, for example the temperature or the flow rate of the faucet, and keep the adjustment previously carried out without needing a continuous retention of the control element 20.

In relation to the various adjustment possibilities of the above-described valve group 30, it appears therefore clear that at least the following operative coupling possibilities between the control element 20 and the valve group 30 are possible.

Figure 3 shows a configuration with an inlet 11 and an outlet 12, directly connected to the valve group 30, wherein the control element 20 controls a valve group 30 specifically destined to adjust the mass per time unit (flow rate) of the water between the inlet 11 and the outlet 12.

Figure 4 shows a configuration with a first inlet 11, a second inlet 13 and an outlet 12, all directly connected to valve group 30. The control element 20 controls the valve group 30 that in this case is destined to adjust a mixing rate of the water flowing on the first inlet 11 with respect to the water flowing on the second inlet 13. In case one of the two inlets is supplied with hot water, and the other one is supplied with cold water, this determines the possibility of adjustment of the temperature of the water supplied towards the outlet 12 of the adjustment device 10 object of the present disclosure.

Figure 5 shows a configuration with a first inlet 11, a second inlet 13, a first outlet 12 and a second outlet 14, all directly connected to the valve group 30. The control element 20 controls the valve group 30 that in this case can be for example destined to variate the flow that from the first inlet 11 towards the first outlet 12 is progressively switched towards a distribution from the second inlet 13 towards the second outlet 14.

In particular, in this case it appears clear that the valve group 30, interposed between the inlet 11 and the second outlet 14, is configured and actuatable to adjust at least, and for example only, the direction of the water dispensed between the first outlet 12 and the second outlet 14.

The valve group 30 can be configured to allow the adjusting of the direction in a progressive way, and uninterruptedly, between a first minimum percentual value and a second maximum percentual value, of the percentage of water dispensed between the first outlet 12 and the second outlet 14. The first minimum percentual value can be zero, or different from zero. The second maximum percentual value can be 100% or a value lower than 100%.

In this case, with the progressive movement of the control element 20 the water initially dispensed from the first outlet 12 is progressively diverted on the second outlet 14, for example up to completely exclude the dispensing from the first outlet 12 in favor of the second outlet.

Alternatively, the valve group 30 can be configured to allow an alternative switching of the dispensing of water between the first outlet 12 and the second outlet 14. In this case, there is no progressive diverting of the flow from the first outlet 12 to the second outlet 14. In this case, the flow of water on the first inlet 11 is integrally directed on the first outlet 12 or is alternatively integrally directed on the second outlet 14.

Figure 6 shows a more complex configuration. A first valve group 30 is connected to a first inlet 11 and to a second inlet 13 of the adjustment device 10. A first control element 20 is destined to control the first valve group 30 in such a way to make it possible to variate a percentage of mixing of the water flowing on the first inlet 11 with respect to the water flowing on the second inlet 13.

Should one of the two inlets be supplied with hot water, and the other one be supplied with cold water, this determines the possibility of adjusting the temperature of the water provided towards the outlet 12 of the adjustment device 10 object of the present disclosure.

The outlet of the first valve group 30 directly supplies an inlet (single inlet) of an auxiliary valve group 32, whose single outlet directly supplies the outlet 12 of the adjustment device 10 object of the present disclosure.

The auxiliary valve group 32 is in this case specifically destined to adjust the mass per time unit (flow rate) of the water that is made to flow towards the outlet 12.

In the embodiment of figure 6 there are a first control element 20 and a second control element 23.

The first control element 20 is connected to the first valve group 30 while the second control element 23 is connected to the auxiliary valve group 32.

The relative position of the valve group 30 and of the auxiliary valve group 32 shall not be intended in a limiting way; the auxiliary valve group 32 could be further arranged upstream one of the inlets of the valve group 30, for partializing the flow of said one inlet with respect to the other.

Not necessarily, in the configuration of figure 6, both the first and the second control element 20, 23 are of a "slider" type as herein described, that is characterized by the aforementioned translatory movement.

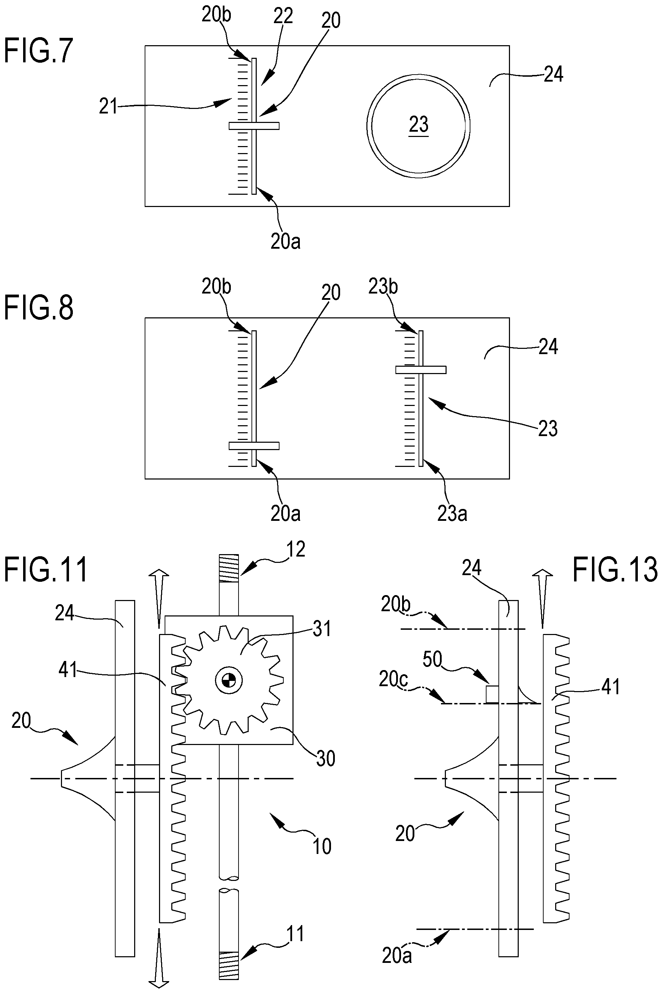

In fact, also only one of such controls could be of the type made object of the present disclosure, while the second control element could be of a rotary, traditional type. This is the case schematically shown in figure 7.

Differently, in figure 8 is schematically shown a particular embodiment of the adjustment device 10 object of the present disclosure wherein both the first control element 20 and the second control element 23 are provided with a sensibly rectilinear translatory movement.

To this regard, the Applicant observes that in case there are a first control element 20 and a second control element 23 having translatory movement, it is not necessary that this movement takes place - as it is shown in figure 8 - on two parallel paths. Such paths could be convergent and/or divergent, at least partially.

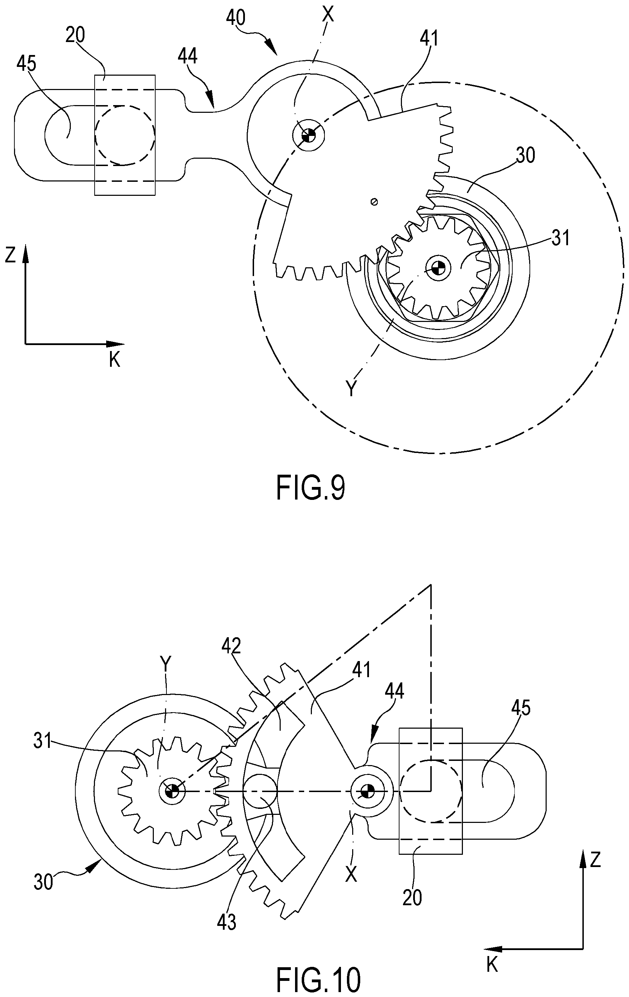

Figure 9 and figure 10 show details of a motion transfer mechanism 40 that is part of the adjustment device 10.

The motion transfer mechanism 40 is operatively interposed between the movable equipment of the valve group 30 and the first control element 20 (or the second control element 23, where present).

In principle, the purpose of the motion transfer mechanism 40 is to transfer the motion of the first control element 20, or of the second control element 23, towards the movable equipment, for example variating the direction, or the rotation axis, or the direction of rotation thereof or by means of a conversion from translatory motion to rotatory motion or vice versa. It is in fact reminded that the movable equipment of the valve group 30 preferably moves by relative rotation around an axis Y, but such configuration is non-limiting.

In the embodiment of figure 9, the motion transfer mechanism 40 comprises a body that in correspondence of a first portion (ending portion) thereof presents an eyelet 45 that allows an engagement portion of the control element 20 to slide within it between a first end-stroke position and a second end-stroke position. The relative sliding between the engaging element of the control element 20 and the eyelet 45 takes place along a translation axis K.

The engagement portion of the control element 20 is for example a substantially cylindrical body, with diameter substantially corresponding to the short axis of the eyelet 45. The engagement portion of the control element 20 is preferably rigidly connected to the gripping portion.

The body of the motion transfer mechanism 40 is rotatably fixed on a rotation axis X that is parallel to the rotation axis Y of the movable equipment of the valve group 30.

In the embodiment of figure 9, the body of the motion transfer mechanism 40 rotates on a plane parallel to the movement plane of the control element 20, and rotates around an axis orthogonal with respect to the movement plane of the control element 20.

More in general, the control element 20 can move along a curved surface that only locally defines a movement plane of the control element 20; in such case the body of the motion transfer mechanism 40 rotates on a plane locally parallel to the movement surface of said control element 20; the movement surface, respectively the translation plane, is the one wherein the translatory movement of the control element 20 between the first end-stroke position and the second end-stroke position takes place.

A second portion of the body of the motion transfer mechanism 40 (said second portion is substantially opposed to the first portion) is provided with a circular sector gear 41, which substantially detects a toothed wheel. For the purposes of the present disclosure such gear designates a driving gear 41.

The driving gear 41 engages on a driven gear 31 which is coupled to the movable equipment of the valve group 30.

With specific reference to the embodiment of figure 9, the driven gear 31 is a circular toothed wheel, and is directly sleeved on a shaft that controls the rotation of the movable equipment of the valve group 30.

The relative position between the rotation axis X of the motion transfer mechanism 40 and the rotation axis Y of the movable equipment of the valve body 30 is fixed.

Consequently, the movement of the control element 20 in translation, in case of figure 9 along a direction parallel to the axis Z (translation axis of the control element), determines a rotation of the driving gear 41, since the whole motion transfer mechanism 40 rotates around the rotation axis X.

There is therefore a relative translation that takes place on the rotation plane of the body of the motion transfer mechanism 40. The relative translation takes place on a translation axis K that is substantially orthogonal to the translation axis of the first control element 20.

By effect of the translation of the control element 20 along the translation axis Z, the relative position of the control element 20 in the eyelet 45 varies. As the control element 20 is lifted, the eyelet 45 moves towards the right (same direction of the translation axis K) until reaching an end stroke position wherein the engaging element of the control element 20 enters in contact with the left inner wall of the eyelet 45.

As the control element 20 is lifted, the body of the motion transfer mechanism 40 rotates in clockwise direction. The driving gear 41 rotates on the rotation axis X in clockwise direction, and the driven gear 31 counter-rotates, in counterclockwise direction, on the rotation axis Y of the movable equipment of the valve body 30.

In the embodiment of figure 10 the motion transfer mechanism 40 comprises a body that in correspondence of a first portion thereof presents an eyelet 45 that allows an engagement portion of the control element 20 to slide within it between a first end-stroke position and a second end-stroke position. The relative sliding between the engaging element of the control element 20 and the eyelet 45 takes place along a translation axis K.

Differently with respect to the former embodiment, shown in figure 9, in this case the body of the motion transfer mechanism 40 is rotating on an axis coinciding to the rotation axis Y of the movable equipment of the valve group 30.

In the embodiment of figure 10, the body of the motion transfer mechanism 40 rotates on a plane parallel to the movement plane of the control element 20, and rotates around an axis orthogonal with respect to movement plane of the control element 20.

However, the body of the motion transfer mechanism 40 is mounted in a free way with respect to the rotation axis Y of the movable equipment of the valve group 30: in other words, the body of the motion transfer mechanism 40 can rotate freely with respect to the rotation set to the movable equipment of the valve group 30. This means that the body of the motion transfer mechanism 40 is rotatably constrained in correspondence of the axis Y, that further constitutes the pivoting axis of the driven gear.

To the body of the motion transfer mechanism 40 is connected a driving gear 41, which is rotatably constrained on a supporting pin that extends along a direction substantially parallel to the direction identified by the rotation axis Y of the movable equipment of the valve group 30.

The supporting pin 44 extends on a rotation axis X that is therefore a rotation axis in correspondence thereof is realized a relative rotation between the driving gear 41 and the body of the motion transfer mechanism 40.

The driving gear 41 engages on a driven gear 31 which is coupled to the movable equipment of the valve group 30.

With specific reference to the embodiment of figure 10, the driven gear 31 is a circular toothed wheel, and is directly sleeved on a shaft that controls the rotation of the movable equipment of the valve group 30.

The relative distance between the rotation axis X of the motion transfer mechanism 40 and the rotation axis Y of the movable equipment of the valve body 30 is fixed; anyway in this case, as it will appear clear from the description that follows, with the movement of the control element 20 the position assumed in the space by the rotation axis X varies; it keeps the same direction, but moves along an orbital plane orthogonal to the direction identified by the rotation axis Y of the movable equipment of the valve group 30.

The driving gear 41 comprises a slotted portion 42, preferably in form of circumference arc.

The slotted portion 42 is defined between a first end (upper end) thereof and a second end (lower end) thereof.

A pin 43 is installed inside the slotted portion 42; the pin 43 is fixed to the body 60.

The movement of the control element 20 in translation, in case of figure 10 along a direction parallel to the axis Z (translation axis of the control element), determines a revolution of the body of the motion transfer mechanism 40 around to the rotation axis X.

Therefore there is a relative translation that takes place on the plane of rotation of the body of the motion transfer mechanism 40. The relative translation takes place on a translation axis K that is substantially orthogonal to the translation axis of the first control element 20.

Such revolution translates into a revolution of the supporting pin 44 around the rotation axis Y of the movable equipment of the valve group 30: the supporting pin 44 completes a substantially circular orbit around such rotation axis Y.

The driving gear 41 rotates around the supporting pin 44, but observed in the space, does not rotate on itself; it, simply, by effect of the rotation of the supporting pin 44 around to the rotation axis Y of the movable equipment of the valve group 30, performs a movement of revolution around to the rotation axis Y, and this movement of revolution determines a counter-rotation of the driven gear 31.

In particular, by effect of the translation of the control element 20 along the translation axis Z, the relative position of the control element 20 in the eyelet 45 varies. As the control element 20 is lifted, the eyelet 45 moves towards left (same direction of the translation axis K) until reaching an end stroke position wherein the engaging element of the control element 20 enters in contact with the right inner wall of the eyelet 45.

As the control element 20 is lifted, the body of the motion transfer mechanism 40 rotates in counterclockwise direction. The driving gear 41 performs a movement of revolution in a counterclockwise direction, and the driven gear 31 counter-rotates, in clockwise direction, on the rotation axis Y of the movable equipment of the valve body 30.

The embodiments shown in figure 9 and in figure 10 clearly show that also when the translatory movement of the control element 20 was non-axial but on a curved path, such translatory movement, besides being realized on a plane sensibly orthogonal to a rotation axis of the movable equipment of the valve group 30, is further a movement that takes place on a position offset with respect to the rotation axis of the movable equipment of the valve group 30.

A further embodiment of the adjustment device 10 object of the present disclosure is shown schematically in figure 11.

In such case it is possible to observe the presence of a driving gear 41 and of a driven gear 31, but in such case the driving gear 41 is not a toothed wheel but is a rack, with a substantial linear development.

In the solution of figure 11, the motion transfer mechanism 40 comprises the driving gear 41 in the form of a rack that moves on a plane substantially parallel to the plane on which moves the control element 20. The valve group 30 comprises a movable equipment which is movable in rotation around an its own axis. Anyway, the rotation axis of the movable equipment is arranged in parallel to the direction along which develops the striking surface 24.

Therefore, the rotation axis of the movable equipment of the valve group 30 is substantially orthogonal with respect to the rotation axis of the movable equipment of the valve group 30 as shown in figures 9 and 10.

The translation of the control element 20 involves a corresponding, in this case identical, translation of the driving gear 41.

The engagement of the latter on the driven gear 31 determines its rotation.

When the driving gear 41 (therefore, the control element 20) is lifted, the driven gear 31 rotates in clockwise direction; when the driving gear 41 (therefore, the control element 20) is lowered, the driven gear 31 rotates in counterclockwise direction.

In case the driving gear 41 has teeth protruding in direction orthogonal to the direction identified in figure 11, the rotation axis of the movable equipment of the valve group 30 may conveniently be arranged orthogonally.

Therefore, it is possible that the teeth of the driving gear 41 are arranged in direction substantially parallel to a direction along which the control element 20 protrudes from the striking surface 24; alternatively, the teeth of the driving gear can be arranged in direction substantially orthogonal to the direction along which the control element 20 protrudes from the striking surface 24.

In the light of the preceding paragraphs it appears clear that the present disclosure shows an adjustment device 10 wherein, the driving gear 41 comprises a respective pivoting and/or rotation axis X and said driven gear 31 comprises a respective pivoting and/or rotation axis Y.

The pivoting and/or rotation axis X of the driving gear 41 and the pivoting and/or rotation axis Y of the driven gear 31 can be in a reciprocal positional relation fixed and/or are fixed. Alternatively, the pivoting and/or rotation axis X of the driving gear 41 and the pivoting and/or rotation axis Y of the driven gear 31 can be in a reciprocal positional relation variable in the space.

The driving gear 41 can orbit around said driven gear 31 and, in some embodiments, does not rotate on itself.

In at least one embodiment, said driving gear 41 comprises a rack, said driven gear comprises a toothed gear and said rack is directly coupled to said toothed gear.

It is considered that what has been above described for the valve group 30 can be further applicable to the auxiliary valve group 32 and to the associated control element 23.

The adjustment device 10 object of the present disclosure can comprise at least one first servo actuator connected to the at least one first control element 20 and configured to allow to remotely adjust the valve group 30, also without the direct contact of the user on the gripping portion of the control element. In particular, the servo actuator is further connected to the motion transfer element 40.

Preferably, but not limiting thereto, the servo actuator comprises an electric motor, for example a stepper motor.

The remote adjustment of the valve group 30 through the servo actuator can be advantageously performed by a remote control, preferably wireless, that can be a cell phone or a dedicated device.

The rotation of the electric motor determines a movement of the movable equipment of the valve group 30 and determines further the movement of the at least one first control element 20 between the first end-stroke position 20a and the second end-stroke position 20b.

What is herein described in relation to the first control element is further valid for the second control element.

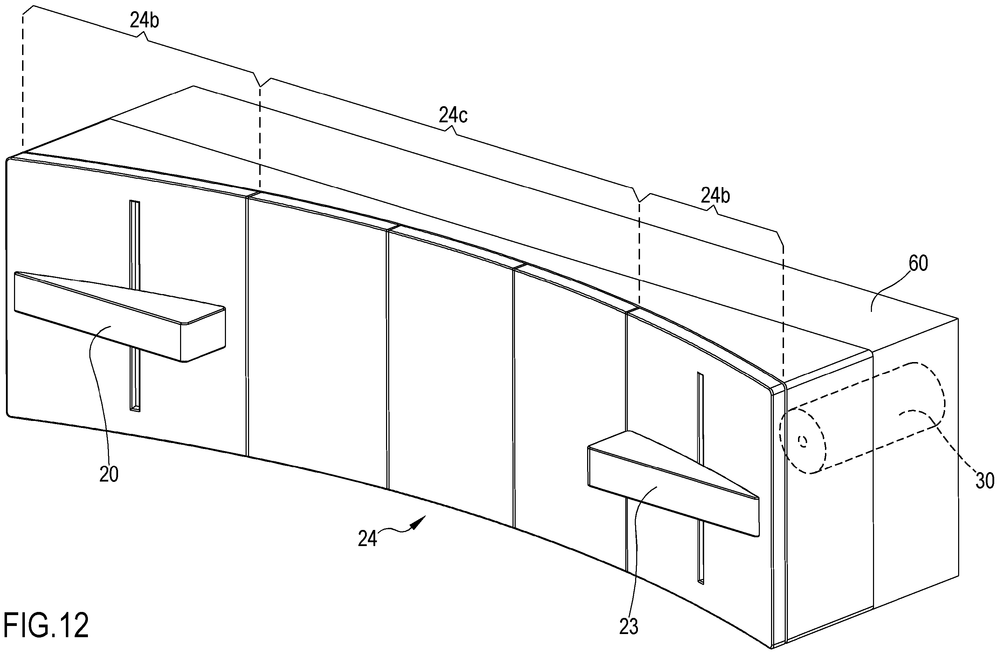

Figure 12 shows a particular embodiment of the adjustment device 10 object of the present disclosure.

The striking surface 24 identifies a curved profile, and in particular identifies a curve that extends obliquely with respect to the development direction of the movement of translation of the first control element 20 and of the second control element 23.

The curved surface can identify a curve without angled points; the curve can have a constant radius or a variable radius.

The first control element 20 and the second control element 23 present, each one, a proximity surface, that is the one which is closest to - and in some cases in substantial contact with - the striking surface 24.

The proximity surface preferably traces the curvature locally assumed by the striking surface 24; this characteristic contributes to provide a particular aesthetic effect of surface matching, in particular appreciable by the user observing the control element from an oblique direction, upwards or downwards.

The distal portion of the control element 20, opposed with respect to the proximity surface, can trace in turn the same curvature or be rectilinear and follow a plane that determines a differentiation of thickness between a first side (for example, the left side) and a second side (for example, the right side) of each control element.

The striking surface 24 comprises a central portion 24c and a first lateral portion 24b and a second lateral portion 24b, respectively left and right.

In the embodiment shown in figure 12, the thickness of the striking surface 24 (direction orthogonal with respect to the direction of sliding of the control element 20 between the first end-stroke position 20a and the second end-stroke position 20b) is variable and is minimum in correspondence of the central portion 24c and is maximum in correspondence of at least one between the first lateral portion 24b and the second lateral portion 24b.

Specifically figure 12 shows an embodiment wherein the thickness in correspondence of a distal end of the first lateral portion 24b is identical to the thickness in correspondence of the distal end of the second lateral portion 24b. This technical feature advantageously allows to define a substantially "enveloping" aspect for the striking surface 24, that gives a context of "introduction" or surrounding by the striking surface 24.

In an embodiment, at least one between the valve group 30 and the auxiliary valve group 32 can be a thermostatic valve group.

A thermostatic valve group comprises a self-adjusting mechanism to which it is associated a thermostat and that is conceived to adjust the flow of water in relation to the temperature assumed by the latter.

Some thermostatic valves, in particular for faucets, are provided with a block for limiting the temperature of the water. This block can be implemented as a security function for avoiding that the water reaches temperatures which are too high, thereby reducing the risk of scalds or burns, especially in cases wherein the hot water is dispensed by faucets destined to a use in environments like public bathrooms, schools, or similar structures where safety is a priority.

These temperature blocks can be realized in different ways, for example by means of a limiting device integrated in the thermostatic valve itself or by means of a separate device installed in the hydraulic system for reducing the temperature of the water exiting from a determined source, as for example a boiler or feedwater heater.

The temperature limit fixed for the block depends on local regulations and specifications of the product. Generally, the temperature block is set at a temperature that is considered safe for the everyday use, in such a way to prevent accidental scalds or burns.

In many jurisdictions, the temperature of the sanitary hot water is adjusted to be no more than 49°C or 38° at the points of use, like faucets or showers. However, settings can variate from one place to another, therefore it is clear that the actual temperature at which the block is performed follows local or national regulations.

It is further observed that some thermostatic valves for faucets can have some particular settings for the temperature block, according to the model and to the manufacturer. Some thermostatic valves can allow the user to manually adjust the temperature block according to one's own preferences or to the specific installation needs.

For this reason, at least one between the valve group 30 and the auxiliary valve group 32 comprises a first fastening element 50 which operatively acts on the stroke of the first control element 20 and/or, in case it is present, on the second control element 23.

The first fastening element 50 defines an intermediate stopping position 20c.

As schematically shown in figure 13, the intermediate stopping position 20c is arranged between said first end-stroke position 20a and said second end-stroke position 20b.

Various positions of the stopping element 50 can be possible in relation to the position of the control element 20.

Generally speaking, the first fastening element 50 can be movable in rotation and/or translation to release the control element 20 in the movement beyond said intermediate stopping position 20c.

In figure 13 it is shown a peculiar embodiment wherein the first fastening element 50 is an element positioned in correspondence of the slot within which the control element 20 slides and that is movable in translation.

The specific triangle conformation of the engagement portion of the first fastening element 50, that identifies a hard step for the control element 20 during a lifting step, shows to said control element 20 a non-orthogonal wall during the lowering step, allows that the first fastening element 50 acts as such only control element 20 is lifted, while releases the control element 20 during the lowering step.

This is particularly useful in case with the lifting of the control element 20 there is a corresponding increase of temperature of the water, since the first fastening element 50 prevents the exceeding of a predetermined temperature, unless unlocked, but leaves the user free to rapidly decrease from a hot temperature to a cold temperature, also bypassing the intermediate stopping position 20c.

In other words, and although such a characteristic is to be considered optional - but preferable - the intermediate stopping position 20c is selectively present according to a sense of movement of said at least one first control element 20 between said first end-stroke position 20a and said second end-stroke position 20b.

The first fastening element 50 operatively acts on the stroke of the control element 20 from said first end-stroke position 20a to said second end-stroke position 20b preventing (unless unlocked) the movement of said at least one first control element 20 from said intermediate stopping position 20c to said second end-stroke position 20b and allowing a free movement of the control element 20 from said second end-stroke position 20b to said first end-stroke position 20a.

Alternatively, the first fastening element 50 operatively acts on the stroke of the control element 20 from said second end-stroke position 20b to said first end-stroke position 20a preventing (unless unlocked) the movement of the control element 20 from said intermediate stopping position 20c to said first end-stroke position 20a and allowing a free movement of the control element 20 from said first end-stroke position 20a to said second end-stroke position 20b.

In a non-limiting embodiment, the first fastening element 50 is integrated in the control element 20 (and/or in the second control element 23, when present). The movements of rotation and/or translation previously described in relation to the first fastening element 50 realized as a separate device with respect to the control element 20, can advantageously be further reported on the control element 20.

The latter in this case can therefore be translated along a direction substantially orthogonal with respect to the direction (preferably, plane) along which develops the translatory movement. In particular, the control element 20 can be translated in extraction with respect to the striking surface 24 or approaching the latter. The control element 20 can be further rotated around an axis substantially orthogonal with respect to the direction (preferably, plane) along which the translatory movement develops. Further, the release of the first fastening element 50 can occur by means of a composite movement of roto-translation of the control element 20.

The above described in relation to the control element 20 can apply to any further control element that is available on the device herein described.

The first fastening element 50 is selectively activated or deactivated to determine, to prevent or release the control element 20 in the movement beyond to the intermediate stopping position 20c through:
- a translation of the control element 20, preferably a translation that takes place along a direction substantially orthogonal with respect to the translation direction between the first end-stroke position 20a and the second end-stroke position 20b, and/or
- a rotation of the control element 20 preferably around an axis orthogonal to the translation direction between the first end-stroke position 20a and the second end-stroke position 20b.

The first fastening element 50 can be the only stopping element present on the device herein described.

Alternatively, the device object of the present disclosure can comprise a first fastening element 50 and a further fastening element (second fastening element). The characteristics of this further fastening element can be substantially the ones of the first fastening element 50, and therefore they are not repeated.

In an embodiment, the first fastening element 50 and the second fastening element operate in the mode described below.

The first fastening element 50 is configured to cooperate with the second fastening element in the mode below.

The first fastening element 50 defines a first intermediate stopping position 20c. The second fastening element defines a second intermediate stopping position, different from the first.

The second stopping position is arranged between the first end-stroke position 20a and the first intermediate stopping position or between the first intermediate stopping position and the second end stroke portion 20b.

The first fastening element 50 can operatively act on the stroke of the control element 20 from said first end-stroke position 20a to said second end-stroke position 20b preventing (unless unlocked) the movement of said at least one first control element 20 from the first intermediate stopping position 20c to said second intermediate stopping position and allowing a free movement of the control element 20 from said second intermediate stopping position to said first end-stroke position 20a.

The second fastening element can act on the stroke of the control element 20 from said first end-stroke position 20a to said second end-stroke position 20b preventing (unless unlocked) the movement of the at least one first control element 20 from the second intermediate stopping position to the second end-stroke position 20b and allowing a free movement of the control element 20 from the second end-stroke position 20b to the first intermediate stopping position or to the first end-stroke position 20a.

The first and the second fastening element can alternatively operate in the dual mode, similarly to what is previously described with reference to the embodiment wherein it is described the presence of a single fastening element 50.

The first and/or in case present the second fastening element can operate not only in relation to a temperature adjustment of the water flow, but also in relation to the flow itself (I/min). More precisely, at least one of those fastening elements can be destined to allow a limitation of a water flow, for example when this exceeds 51/min or 6l/min or 8l/min.

In accordance to the specific configurations, the first fastening element 50 and/or the second fastening element is substantially mechanically controlled. Alternatively the first fastening element 50 and the second fastening element 50 can be electrically controlled, in particular electronically, also by means of a remote control.

At least one between the first intermediate stopping position and the second intermediate stopping position is settable by the user (therefore in an operative way) or can be factory settable.

This solution presents a particular "cleanliness" of design, since the aesthetic aspect of the adjustment device 10 simply shows the first control element 20, or, in the present case, the first and the second control element 20, 23.

The first end-stroke position 20a and the second end-stroke position 20b can be defined in different ways, hereinafter described.

In a first embodiment, it is the striking surface 24 that defines at least one between the first end-stroke position 20a and the second end-stroke position 20b; in particular, in a non-limiting embodiment, the slot 22 defines a first end and a second end opposed to the first end.

The first end defines the first end-stroke position 20a (control element 20 stopped by the first end); the second end defines the second end-stroke position 20b (control element 20 stopped by the second end).

Alternatively, in a non-limiting embodiment, it is the movable equipment of the valve group 30 (or, if present, of the auxiliary valve group 32) to define the first end-stroke position and the second end-stroke position for the control element 20.

In this case, the movable equipment comprises a respective first stopping position and a second stopping position, and wherein said first stopping position defines said first end-stroke position 20a and said second stopping position defines said second end-stroke position 20b.

In a further embodiment, in particular in the embodiment shown in figure 10, it can be the pin 43 that determines the first end-stroke position 20a and the second end-stroke position 20b, in particular when it enters into contact with the ends of the slotted portion 42.

In a particular embodiment, the sizing of the various components above described is such that the first stopping position of the movable equipment puts the control element 20 in a position corresponding to the first end of the slot 22 of the striking surface 24; preferably the second stopping position of the movable equipment puts the control element 20 in a position corresponding to the second end of the slot 22 of the striking surface. In case the motion transfer mechanism is as in figure 10, the first stopping position and the second stopping position can be respectively correspondent to the first end and to the second end of the slotted portion 42 of the driving gear 41.

It is noted finally that the device herein described can be provided with the valve group 30 (or the plurality of valve groups) or without the above mentioned one. In light thereof, it appears clear that further forms part of the present disclosure a control device 10 for a valve group 30 configured to dispense a water flow coming from hydrosanitary devices 100.

The control device comprises at least one first control element 20 of the valve group 30, operatively connected to said valve group 30.

The first control element 20 is configured to be moved by a user and is movable with a translatory movement at least between a first end-stroke position 20a and a second end-stroke position 20b.

It is also present a motion transfer mechanism 40.

The motion transfer mechanism 40 is operatively connected, in particular operatively interposed, between a movable equipment of said valve group 30 and the at least one first control element 20.

The motion transfer mechanism 40 is configured to convert the movement of said at least one first control element 20 in a movement of rotation of said movable equipment.

The Applicant observes that the valve group 30 shall not be considered compulsory. In fact, the adjustment device 10 object of the present disclosure can further be configured to allow the control of movable components of a hydrosanitary device 100, that not necessarily include a valve group.

For that purpose, it has been particularly conceived an embodiment that comprises at least one first control element 20, configured to control the operation of at least one component, in particular a movable component, of a hydrosanitary device 100, and configured to be directly controlled by the touch of a user.

Such embodiment comprises a striking surface 24 for said at least one first control element 20.

The striking surface 24 is preferably configured to be fixed to said hydrosanitary device 100.

As in the case of the previously described embodiments, the first control element 20 is movable with a translatory movement at least between a first end-stroke position 20a and a second end-stroke position 20b.

The adjustment device 10 is configured to be installed in a position substantially front and/or directly visible in use of said hydrosanitary device 100.

In particular, the movable component can be a discharge stopper of said hydrosanitary device 100 or can be a adjuster that allows to set a faucet or a head of water dispensing between a first and a second position.

The embodiment herein described can further comprise at least one first inlet 11 for water and at least one first outlet 12 for water dispensing.

The at least one component can comprise the at least one valve group 30 operatively interposed between said at least one first inlet 11 and said at least one first outlet 12, and configured and actionable to adjust at least a direction and/or a mass flow rate of fluid and/or a temperature of the water dispensed from said at least one first outlet 12.

In such case, the at least one first control element 20 is a control element of said valve group 30, operatively connected to said valve group 30 for actuating it and configured to be moved by a user.

In relation to the first control element 20, such first control element results "operatively connected" to the valve group 30. "Operatively connected" can include a purely mechanical connection or a connection that takes place by means of an aid of an electronic device.

A specific embodiment of the adjustment device 10 object of the present disclosure comprises at least one first control element 20 of a virtual type.

In such case the striking surface 24 is, or comprises, a screen, in particular a touch-sensitive screen. This technical feature allows to graphically show at least one first control element 20 in the form of an image, and allows the user to activate the first control element 20 by means of a direct contact of the finger on the screen.

Preferably the screen is a waterproof screen. This technical feature allows to use the screen without worrying about any splashes or jets of water that can be common in a bathroom environment.

The use of at least one first virtual control element 20 does not need a slot 22; anyway, in order to provide an appropriate immersive experience similar to that of a control of a Hi-Fi system, the screen can be appropriately controlled to graphically show an image similar to that of a slot.

In this embodiment, the adjustment device 10 comprises a data processing unit 10m. Such data processing unit 10m can be a unit on which it is run at least a portion of a software or firmware program loaded on a memory support. Such software program can be written in any programming language of known type.

The data processing unit 10m, or control unit, can be a general-purpose type processor specifically configured to carry out one or more parts of the process identified in the present disclosure by means of the software or firmware program, or be an ASIC or dedicated processor or a FPGA specifically programmed to run at least part of the operations of the process herein described.

The data processing unit 10m is for example connected to the screen with an electrical connection. Alternatively, the data processing unit 10m is connected to the screen with an optic fiber connection, that advantageously is less prone to phenomena of incompatibility with humid environments with respect to an electrical connection.

In case it is present a screen and the first control element 20 is of a virtual type, to said first control element 20 can be assigned functions different with respect to the ones of the setting of the valve group. What is herein described in relation to the first control element 20 is further valid for any further control element that is represented on the screen.

For example, and not limiting thereto, the first control element 20 can be electrically re-assigned at least temporarily to the setting of a volume of reproduction of a multimedia content, or to the setting of a radiation intensity or color of an optical radiation source.

Clearly, in this case the data processing unit will be connected for example to a multimedia source, also remotely arranged with respect to the device herein described, and/or will be connected to the optical radiation source.

Further examples of re-assigning possibility for the first control element 20 can include in a non-limiting way a home automation device comprising for example at least one among a fan, a conditioner, a vaporizer or humidifier, an aroma diffuser, a heater, an anti-theft.

In this specific embodiment the motion transfer device 40 can be anyway present; anyway, it is not directly connected to the first control element 20 but is connected with an electric servo actuator.

It is noted finally that such specific embodiment can anyway comprise optionally at least one first fastening element. Anyway, in this case the at least one first fastening element is conveniently a virtual stopping element.

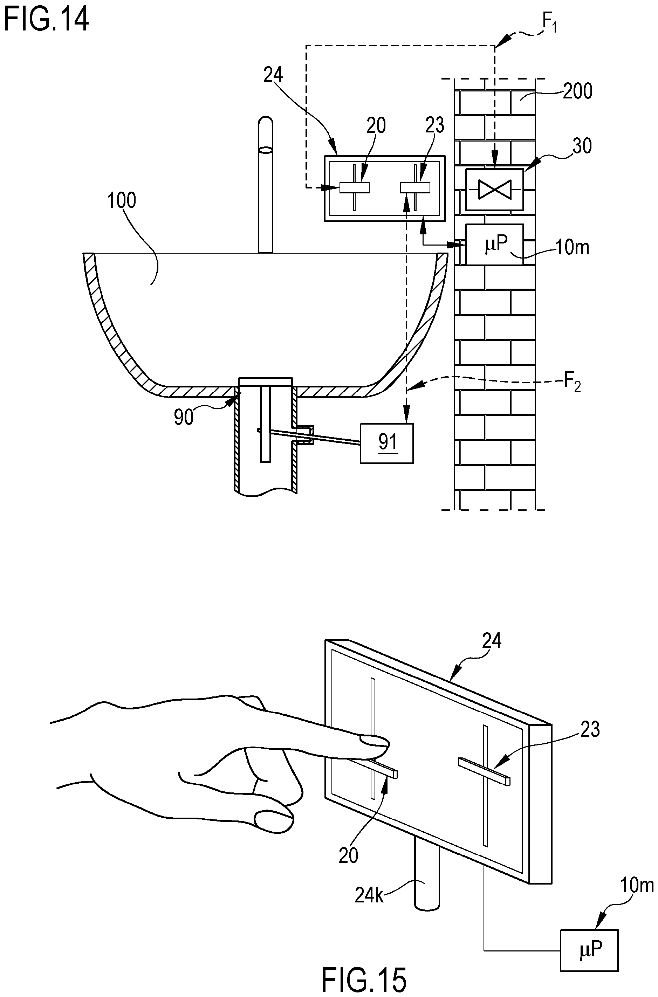

Figure 14 shows a particular embodiment of the adjustment device 10 object of the present disclosure, having a first control element 20 and a second control element 23 of virtual type. The first control element controls the operation of a valve group 30 (arrow F1) and the second control element 23 controls the operation in opening and closing of a discharge stopper 90 of the faucet (arrow F2), in particular acting on a control servo actuator 91 of the opening and closing of the discharge stopper 90.

Figure 15 shows in a simplified way an example of screen that shows the first control element and the second control element. Clearly, being images, these control elements do not protrude from the surface of the screen. The screen is supported by a support 24k that allows a variation of an orientation (rotation) and/or of a translation.

The invention is not limited to the embodiments of figures; for this reason, the numbers and reference signs in the claims are provided for the sole purpose of increasing the intelligibility thereof, and do not have limiting character.

It is finally clear that to the object of the present disclosure can be applied additions, modifications or variants, obvious for a person skilled in the art, without for this departing from the scope provided by the attached claims.

## Claims

1. Adjustment device (10) for hydrosanitary devices (100), comprising:
- at least one first inlet (11) for water;
- at least one first outlet (12) for water dispensing;
- at least one valve group (30) operatively interposed between said at least one first inlet (11) and said at least one first outlet (12), and configured and actionable to adjust at least one direction and/or a mass flow rate of fluid and/or a temperature of water dispensed from said at least one first outlet (12);
- at least one first control element (20) of said valve group (30), operatively connected to said valve group (30) for actuating it and configured to be moved by a user;
wherein said at least one first control element (20) is movable with a translatory movement at least between a first end-stroke position (20a) and a second end-stroke position (20b).

2. Adjustment device (10) according to claim 1, comprising a striking surface (24) for said at least one first control element (20),
wherein said valve group (30) is a valve group for a hydrosanitary device (100);
wherein said at least one first control element (20) is movable with said translatory movement with respect to and/or on said striking surface (24),
and wherein said striking surface (24) is a surface destined to assume a fixed position with respect to an installation environment of said hydrosanitary device (100);
optionally wherein said striking surface (24) presents a slot (22) configured to house at least one part of the first control element (20) and/or defining a movement path delimited for said at least one first control element (20), in particular between said first end-stroke position (20a) and said second end-stroke position (20b);
preferably, the striking surface (24) being configured to be engaged, preferably fixed, to a support or wall (200) and to lie in a fixed position with respect to said support or wall (200);
optionally wherein said support is a sink holder and/or wherein said adjustment device (10) is a built-in device.

3. Adjustment device (10) according to claim 2, wherein said substantial translation movement is a movement substantially developing on a plane, preferably a plane parallel to a plane on which said striking surface (24) lies, and/or wherein said substantial translation movement occurs on a substantially straight path defined along a translation axis (Z) of said at least one first control element (20) and defined between said first end-stroke position (20a) and said second end-stroke position (20b), or occurs on a substantially curvilinear path defined between said first end-stroke position (20a) and said second end-stroke position (20b).

4. Adjustment device (10) according to one or more of the preceding claims, comprising a motion transfer mechanism (40),
wherein said valve group (30) comprises a movable equipment, in particular movable in rotation with respect to a fixed equipment of said valve group (30),
and wherein said motion transfer mechanism (40) is operatively connected, in particular operatively interposed, between said movable equipment and said at least one first control element (20) and is configured to convert the substantial translation movement of said at least one first control element (20) in a rotation movement of said movable equipment.

5. Adjustment device (10) according to claim 2 and/or claim 4, wherein said striking surface (24) defines at least one between said first end-stroke position (20a) and said second end-stroke position (20b), preferably wherein said slot (22) comprises a first end defining said first end-stroke position (20a) and a second end defining said second end-stroke position (20b);
and/or wherein the movable equipment comprises a respective first stopping position and a second stopping position, and wherein said first stopping position defines said first end-stroke position (20a) and said second stopping position defines said second end-stroke position (20b).

6. Adjustment device (10) according to claim 4 or claim 5, wherein said movable equipment rotates on its own rotation axis, and wherein said at least one first control element (20) lies in a position offset with respect to said rotation axis of said movable equipment and/or wherein said translatory movement occurs along a path offset with respect to said rotation axis of said movable equipment and/or wherein said translatory movement occurs along a inclined plane, preferably substantially orthogonal, with respect to said rotation axis of said movable equipment.

7. Adjustment device (10) according to one or more of the preceding claims, wherein said valve group (30) is a thermostatic valve group and/or wherein said adjustment device (10) comprises at least one first fastening element (50) acting operatively on the stroke of said at least one first control element (20) to define a first intermediate stopping position (20c), said first intermediate stopping position (20c) being located between said first end-stroke position (20a) and said second end-stroke position (20b);
said at least one first fastening element (50) being movable in rotation and/or translation to release said at least one first control element (20) in the movement beyond said first intermediate stopping position (20c);
preferably wherein:
- said first intermediate stopping position (20c) is selectively present according to a sense of movement of said at least one first control element (20) between said first end-stroke position (20a) and said second end-stroke position (20b);
- said at least one first fastening element (50) acts operatively on the stroke of said at least one first control element (20) from said first end-stroke position (20a) to said second end-stroke position (20b) preventing the movement of said at least one first control element (20) from said first intermediate stopping position (20c) to said second end-stroke position (20b) and allowing a free movement of said at least one first control element (20) from said second end-stroke position (20b) to said first end-stroke position (20a), or alternatively
- said at least one first fastening element (50) acts operatively on the stroke of said at least one first control element (20) from said second end-stroke position (20b) to said first end-stroke position (20a) preventing the movement of said at least one first control element (20) from said first intermediate stopping position (20c) to said first end-stroke position (20a) and allowing a free movement of said at least one first control element (20) from said first end-stroke position (20a) to said second end-stroke position (20b).

8. Adjustment device (10) according to claim 10, wherein said at least one first fastening element (50) is embedded in said at least one first control element (20), and is selectively activated or deactivated for determining, for preventing or releasing said at least one first control element (20) in the movement beyond said first intermediate stopping position (20c) by means of a translation of said first control element (20), preferably along a direction substantially orthogonal with respect to the translation direction between said first end-stroke position (20a) and said second end-stroke position (20b) and/or by means of a rotation of said at least one first control element (20) preferably around an axis orthogonal to the translation direction between said first end-stroke position (20a) and said second end-stroke position (20b).

9. Adjustment device (10) according to one or more of the preceding claims, comprising a body (60), configured to retain said at least one valve group (30), optionally said valve group (30) and said auxiliary valve group (32), in a predefined position;
wherein said body (60) is a substantially box-like body, configured to be fixed in a predefined position on a support, preferably to a wall (200), optionally to be at least partially built-in within said support, preferably to be at least partially built-in within said wall (200).

10. Adjustment device (10) according to one or more of the preceding claims when dependent on claim 2, wherein said striking surface (24) is a surface substantially detecting a curved profile, in particular detecting a curve extending substantially obliquely, preferably orthogonally, with respect to a development direction of said translatory movement of the at least one first control element,
preferably wherein said at least one first control element (20) possesses a surface of proximity to said striking surface (24) detecting a curved profile tracing the curved profile locally assumed by said striking surface (24);
and/or wherein said striking surface (24) possesses a variable thickness, and possesses a central portion (24c) and a first lateral portion (24b) and a second lateral portion (24b); the thickness being minimum in correspondence of said central portion (24c) and greater with respect to said minimum in correspondence of at least one between said first lateral portion (24b) and said second lateral portion (24b).

11. Adjustment device (10) according to one or more of the preceding claims, wherein said at least one first control element (20) is a physical command and comprises a gripping portion in use directly controlled and/or manipulated by the fingers of a user,
preferably wherein said adjustment device (10) comprises a servo actuator, optionally an electric motor, operatively connected with said at least one first control element (20) and configured to determine a movement of said at least one first control element (20) through a remote control, preferably a wireless remote control.

12. Adjustment device (10) according to one or more of the preceding claims, wherein said at least one first control element (20) is a virtual command, and wherein said striking surface (24) comprises a screen in use representing the image of said at least one first control element (20),
said screen being touch-sensitive to allow the movement of said at least one first control element (20) between said first end-stroke position (20a) and said second end-stroke position (20b).

13. Adjustment device (10) according to claim 20, wherein said at least one first control element (20) is electronically reassignable, preferably electronically reassignable to an accessory function different than an actuation of said valve group (30);
said adjustment device (10) comprising a data processing unit (10m) operatively, preferably electrically and/or optically, connected to said screen, said data processing unit (10m) being configured to assign said at least one first control element (20) to the actuation of said valve group (30) or, alternatively, to said accessory function;
said accessory function being a control function of an electronic device, optionally at least one among a home automation device, a multimedia source, an optical radiation source.

14. Adjustment device (10) for hydrosanitary devices (100), comprising:
- at least one first control element (20), configured to control the operation of at least one component, in particular a movable component, of a hydrosanitary device (100), and configured to be directly controlled by the touch of a user;
- a striking surface (24) for said at least one first control element (20), said striking surface (24) being configured to be engaged, preferably fixed, to said hydrosanitary device (100),
- wherein said at least one first control element (20) is movable with a translatory movement at least between a first end-stroke position (20a) and a second end-stroke position (20b);
wherein said adjustment device (10) is configured to be installed in a substantially front and/or directly visible position in use of said hydrosanitary device (100).

15. Adjustment device (10) according to claim 14, wherein said adjustment device (10) comprises:
- at least one first inlet (11) for water;
- at least one first outlet (12) for water dispensing;
wherein said at least one component comprises at least one valve group (30) operatively interposed between said at least one first inlet (11) and said at least one first outlet (12), and configured and actionable to adjust at least one direction and/or a mass flow rate of fluid and/or temperature of water dispensed from said at least one first outlet (12);
and wherein said at least one first control element (20) is a control element of said valve group (30), operatively connected to said valve group (30) to activate it and configured to be moved by a user;
and/or wherein said at least one component comprises a discharge plug of said hydrosanitary device (100) or comprises a position adjuster of a faucet or of a water dispensing head.
